# EUROPÄISCHE PATENTSCHRIFT

(11) **EP 1 116 398 B1**
(45) Veröffentlichungstag und Bekanntmachung des Hinweises auf die Patenterteilung: **03.10.2007**
(21) Anmeldenummer: 99953708.7
(22) Anmeldetag: 30.08.1999
(51) Int. Cl.: H04Q 7/22

(54) **KANALZUWEISUNG EINES KANALS FÜR DATENCALLS MIT ANDEREM NUTZ-/STÖRSIGNAL(N/S)-VERHÄLTNIS ALS BEI KANÄLEN FÜR SPRACH-CALLS IN MOBILFUNKNETZEN**
ALLOCATION OF A CHANNEL FOR DATA CALLS WITH A DIFFERENT USEFUL SIGNAL/DISTURB SIGNAL RATIO THAN FOR CHANNELS USED FOR VOICE CALLS IN MOBILE RADIO NETWORKS
AFFECTATION D'UN CANAL POUR LA COMMUNICATION DE DONNEES AVEC UN RAPPORT SIGNAL UTILE/SIGNAL PARASITE DIFFERENT DE CELUI PRESENTE PAR DES CANAUX SERVANT A LA COMMUNICATION VOCALE DANS DES RESEAUX RADIOTELEPHONIQUES MOBILES

(30) Priorität: 21.09.1998 DE 19845796
(43) Veröffentlichungstag der Anmeldung: 18.07.2001
(73) Patentinhaber: Vodafone Holding GmbH, 40213 Düsseldorf (DE)
(72) Erfinder: KELLER, Martin, D-40591 Düsseldorf (DE); LAMBRECHT, Frank, D-40217 Düsseldorf (DE); LEINENBACH, Stefan, D-40489 Düsseldorf (DE); RICHTER, Joachim, D-40721 Hilden (DE); WAHSNER, Robert, D-40211 Düsseldorf (DE)
(74) Vertreter: Meissner, Peter E.
(86) Internationale Anmeldenummer: PCT/DE1999/002795
(87) Internationale Veröffentlichungsnummer: WO 2000/018153

(56) Entgegenhaltungen:
- EP-A- 0 802 691
- WO-A-92/04784
- US-A- 5 507 008

## Beschreibung

Die Erfindung betrifft ein Verfahren zur Zuweisung von für eine Telekommunikationsverbindung über ein Telekommunikationsnetz zwischen einem Anrufer und einem Angerufenen angeforderten Kanälen und eine Vorrichtung zur Durchführung des Verfahrens.
Sie betrifft insbesondere die Zuweisung eines Kanals für eine Luftschnittstelle in einem Mobilfunknetz.

Mobilfunk-Telekommunikationsnetze sind beispielsweise bekannt aus den ETSI-GSM-Empfehlungen.

In der Schrift EP-A- 0 802 691 A3 ist ein Übertragungssystem für Mobilfunk-Kommunikation beschrieben, das aus einer Server-Einheit, einer Teilnehmer-Einheit, einer Funkverbindungseinheit zur Verbindung mit dem Kommunikationsnetzwerk, einer allgemeinen Funk-Basisstation inerhalb einer Funkzelle und einem Mobilfunkterminal, welches einen Funkkanal mit der allgemeinen Funk-Basisstation währen des Funkbetriebs bildet, besteht.
Das Übertragungssystem vollzieht eine Datenverbindung zwischen der Server-Einheit und dem Mobilfunkterminal.
Die Schrift WO-A-92 04784 betrifft ein Verfahren und eine Kommunikationseinheit zur Ausbildung einer analogen Kommunikation mittels einer Kommunikationseineit in einem Kommunikationssystem, das einen Kommunikationsressourcencontroler aufweist, der eine analoge Kommunikation und eine synchrone digitale Kommunikation mit der wenigstens einen Kommunikationseinheit ausbilden kann.
Die Schrift US-A- 5 597 008 offenbart ein Kanalzuweisungsverfahren für ein Mobil-Kommunikationssystem mit den Schritten:
- Auswählen des unbelegten Sprachkommunikationskanals mit der höchsten Priorität der Kanäle
- Bestimmung, ob mindestenes eines der Träger-Interferenz-Verhältnisse der Hinrichtung oder der Rückrichtung des ausgewählten Sprachkommunikationskanals größer oder gleich einem ersten Pegel ist
- Zuweisen des ausgewählten Kanals als einen Sprachkommunikationskanal für die Zelle
- Auswählen eines der restlichen unbelegten Sprachkommunikationskanäle mit der nächsten Priorität, wenn der vorher ausgewählte Kanal nicht zugewiesen wird
- Wiederholen des zweiten bis vierten Schrittes.

Aus dem Buch Jacek Biala, Auflage 1996, ISBN 3-528-15302-4, Seite 76, 3.4.1 ist bekannt, daß ein (im weiteren kurz als "logischer Kanal" bzw. "Kanal' bezeichneter) Verkehrskanal, welcher auch als TCH oder Traffic Channel oder Nutzkanal bezeichnet wird, als Sprachkanal oder als Datenkanal verwendet werden kann. Ein logischer Kanal kann als Sprachkanal wie auch als Datenkanal jeweils im Fullrate-Modus oder im Halfrate-Modus betrieben werden. Die Übertragung über einen Datenkanal kann sowohl leitungs- als auch paketvermittelt sein. Logische Kanäle werden auf physikalische Kanäle abgebildet. Ein physikalischer Kanal wird charakterisiert durch einen Zeitschlitz und eine Frequenz bzw. mehrere Frequenzen. Ein logischer Kanal kann mehrere physikalische Kanäle enthalten. Bei einer Multislot Knfiguration werden für einen logischen Kanal mehrere Zeitschlitze verwendet.

Wie stark eine Übertragung über einen "physikalischen Kanal" durch Übertragungen über andere physikalische Kanäle identischer oder benachbarter Frequenzen in der gleichen oder einer benachbarten Mobilfunkzelle gestört wird, hängt vom Nutz- /Störsignal-Verhältnis ab.
Das N/S Verhältnis ist durch die eigene Sendeleistung (Nutzsignal) und die Störsignale aus den benachbarten Funkzellen gegeben. Die Störsignale werden bestimmt durch die Sendeleistung der Störer (Mobilstation oder Basisstation), die Ausbreitungsbedingungen und die räumliche Distanz vom Störer zum Gestörten.

Aufgabe der vorliegenden Erfindung ist, für ein hinsichtlich der zur Verfügung stehenden Frequenzen vorgegebenes Mobilfunknetz, die optimierte Ausnutzung der Kapazitäten unter Berücksichtigung der unterschiedlichen Qualitätsanforderungen für Daten- und Sprach Calls bei der Zuweisung von angeforderten Kanälen. Die Aufgabe wird durch die Gegenstände der unabhängigen Ansprüche gelöst.

Indem erfindungsgemäß bei Anforderung eines Datenkanals bevorzugt ein physikalischer Kanal mit anderem (=unterschiedlichem), insb. besserem Nutzsignal-Störsignal-Verhältnis ausgewählt wird, als bei Anforderung eines Sprachkanals, wird die Ausnutzung vorhandener Kapazitäten (insbesondere an Frequenzen) optimiert, da bei Datenkanälen unterschiedliche Anforderungen an das Nutzsignal-Störsignal-Verhältnis bestehen als bei Sprachkanälen. Die Erfindung ist insbesondere für die Zuweisung eines physikalischen Kanals für eine Luftschnittstelle (Um) in einem Mobilfunknetz von Bedeutung. Im folgenden wird davon ausgegangen, daß Daten Calls ein höheres N/S-Verhältnis als Sprach Calls benötigen. Im umgekehrten Fall gilt entsprechendes. Das bessere N/S-Verhältnis eines Datenkanals verglichen mit einem Sprachkanal wird insbesondere dadurch erzielt, daß jeweils in einer Mobilfunkzelle ein physikalischer Kanal einem Datenkanal zugewiesen wird, deren Störung durch physikalische Kanäle auf gleichen und/oder benachbarten Frequenzen geringer ist als bei bevorzugt Sprachkanälen zuzuweisenden physikalischen Kanälen. Unter Sprachkanal wird ein zur Übertragung von Sprache angeforderter Kanal verstanden. Ein Datenkanal ist ein zur Übertragung von Daten angeforderter (oder evtl. nach Beobachtung des Mobilfunk-Telekommunikationsnetzes gerade verwendeter) Kanal. Ein Kanal (Sprachkanal oder Datenkanal) ist hier, wie bereits oben ausgeführt, ein Verkehrskanal oder TCH- oder Nutzkanal nach GSM bzw. eines vergleichbaren Kanals in anderen Mobilfunknetzen bzw. eines noch zu definierenden Kanals in kommenden Mobilfunkstandards. Die Anforderung eines Kanals für Sprache oder Daten erfolgt durch einen Teilnehmer (in der Regel den Anrufer) beim Mobilfunknetz. Die Telekommunikationsverbindung wird nach Kanalzuweisung aufgebaut zwischen mindestens zwei Teilnehmern.

Das Verfahren ist in einem Mobilfunk-Telekommunikationsnetz realisierbar, indem Zuweisungsvorrichtungen dort so ausgebildet sind, daß bei Anforderung eines Datenkanals bevorzugt ein physikalischer Kanal mit besserem Nutzsignal-Störsignal-Verhältnis ausgewählt wird als bei Anforderung eines Sprachkanals, insbesondere gemäß den Unteransprüchen zum Verfahrenshauptanspruch. Zuweisungsvorrichtungen im Mobilfunk-Telekommunikationsnetz können alle allein oder gemeinsam an der Zuweisung eines Kanals in einer oder mehreren Funkzellen beteiligte Vorrichtungen sein. Es können insbesondere Vorrichtungen sein, wie eine BSC, MSC, BTS, andere Einrichtungen oder mehrere vorgenannter Einrichtungen in Kombination.

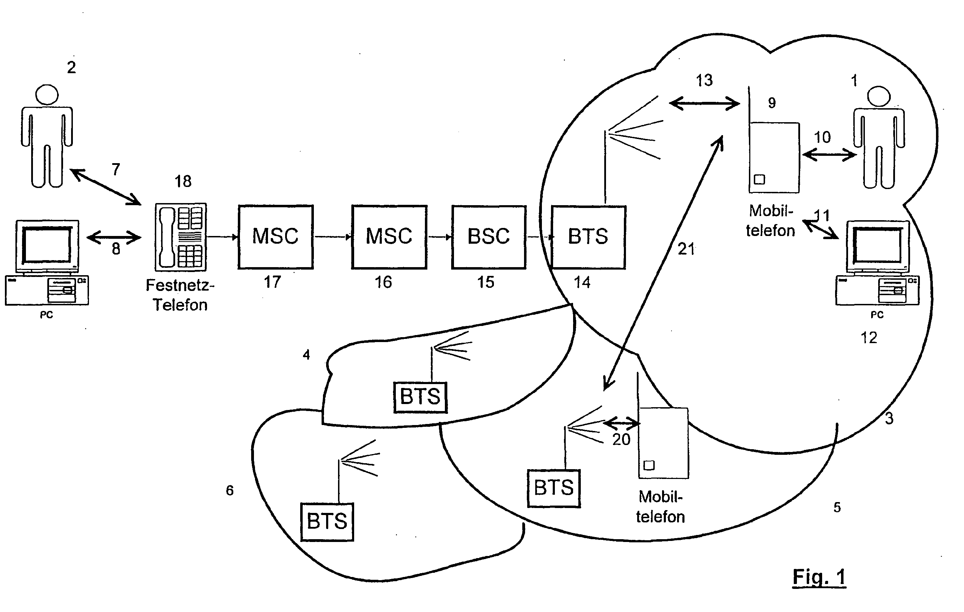

Weitere Merkmale und Vorteile der Erfindung ergeben sich aus der nachfolgenden Beschreibung eines Ausführungsbeispiels anhand der Zeichnung. Dabei zeigt
- Fig. 1: schematisch einen als Datenkanal oder Sprachkanal einsetzbaren Kanal zwischen zwei Telekommunikationsteilnehmern.

Fig. 1 zeigt zwei Teilnehmer 1, 2, von denen sich hier der Teilnehmer 1 in einem Mobilfunknetz, nämlich in der Funkzelle 3 des Mobilfunknetzes befindet, wobei die Funkzelle 3 von einigen beispielhaft dargestellten benachbarten Funkzellen 4, 5, 6 umgeben ist, von welchen die Funkzellen 4, 5 der Funkzelle 3 unmittelbar benachbart sind, während die Funkzelle 6 der Funkzelle 3 mittelbar benachbart ist.

Der Teilnehmer 2 hat hier einen Festnetz-Anschluß (PSDN/ISDN etc.), welcher Festnetzanschluß für Sprachübertragung 7 und (von einem PC aus) Datenübertragung 8 verwendbar ist. Der Mobilfunkteilnehmer 2 kann sich dabei anstatt in einem Festnetz ebenso in einem Mobilfunknetz befinden. Der Teilnehmer 1 kann über sein Mobilfunk-Endgerät 9 per Sprache 10 oder von seinem PC 12 (auch über das Mobilfunk-Endgerät 9, z.B. Handy) in Form des Sendens oder/und Empfangens Daten (nicht sprachbezogen) über das Mobilfunknetz mit dem Teilnehmer 2 kommunizieren. Dabei kommuniziert das Mobilfunk-Endgerät 9 über die Funkschnittstelle 13 (Um) mit der BTS 14 des Mobilfunketzes. Von der BTS 14 läuft die Telekommunikationsverbindung des Teilnehmers 1 weiter über die BSC 15, die MSCs16 und 17 zum Festnetz-Endgerät 18 des Teilnehmers 2.

Über die Funkschnittstelle 13 kommuniziert der Teilnehmer 1 mit dem Teilnehmer 2 über einen Verkehrskanal = TCH = Traffic Channel = Nutzkanal. Der Verkehrskanal kann ein Fullrate-oder Halfrate-Kanal sein. Über einen derartigen Kanal kann Sprache übertragen werden, wobei er als Sprachkanal bezeichnet wird, und es können Daten übertragen werden, wobei er als Datenkanal bezeichnet wird. Hier handelt es sich also nicht um einen Datenkanal wie einen Kurznachrichtenkanal, sondern um einen Verkehrskanal.

Von den unmittelbar benachbarten Funkzellen 4, 5 und der mittelbar benachbarten Funkzelle 6 werden ebenfalls über Funkschnittstellen zu in diesen Funkzellen 4, 5, 6 befindlichen Teilnehmern Daten oder Sprache gesendet. Dabei breitet sich ein Funksignal 20 aus einer Funkzelle 4, 5 oder 6 als Störsignal 21 auch in die Funkzelle 3 des Teilnehmers 1 aus. Wenn vom Teilnehmer 1 an den Teilnehmer 2 über die Funkschnittstelle 13 derart gesendet werden soll, daß der physikalische Kanal 13 als Datenkanal verwendet wird, sind die Anforderungen an das Nutzsignal-Störsignal Verhältnis (13 zu 21) größer als bei Verwendung des physikalischen Kanals 13 als Sprachkanal. Das Nutzsignal-Störsignal-Verhältnis ist dabei das Verhältnis der Empfangsleistungen des über den Datenkanal gesendeten Nutzsignals 13 zu einem als Störsignal 21 wirkenden Signal insbesondere aus einer benachbarten Funkzelle 4 oder 5.

Um nun die erhöhten Anforderungen an das Nutzsignal-Störsignal-Verhältnis bei Datenkanälen bei einem vorhandenen Mobilkommunikationsnetz optimieren zu können, wird ein physikalischer Kanal bevorzugt dann als Datenkanal zugewiesen, wenn er aufgrund der Frequenzverteilungen in unmittelbar und/oder mittelbar benachbarten Funkzellen ein besseres Nutzsignal-Störsignal-Verhältnis als andere physikalische Kanäle aufweist. Die Zuweisung zu guten physikalischen Kanälen kann insofern "bevorzugt" erfolgen als sie erfolgt, soweit hinsichtlich des N/S-Verhältnis gute Kanäle frei sind oder von Sprachcalls freigeräumt werden können.

Die Planung für ein Mobilfunknetz soll so erfolgen, daß die notendigen N/S-Verhältnisse für Daten und Sprach Calls im Bereich der bedienenden Funkzellen gewährleistet sind. Dies kann unter anderem erreicht werden, in dem die Vergabe gleicher und / oder benachbarter Frequenzen in benachbarten Funkzellen vermieden wird. In welchen mittelbar oder unmittelbar benachbarten Funkzellen dabei ein Gleich-und / oder Nachbarfrequenzausschluß (also der Ausschluß der Vergabe der gleichen und / oder der benachbarten Frequenz innerhalb von zwei Funkzellen) definiert wird, hängt von unterschiedlichen räumlichen Gegebenheiten, wie Funkzellengrößen, Wellenausbreitungshindernissen (Gebäuden, Bergen etc.) und Sendeleistungen ab. Welche Vorgaben für mittelbar oder unmittelbar benachbarte Funkzellen in einem Mobilfunknetz vorliegen, wird bei der Planung des Mobilfunknetzes aufgrund verschiedener Planungsmodelle realisiert.

Erfindungsgemäß werden physikalische Kanäle den Datenkanäle zugewiesen, welche hinsichtlich Störsignalen aus anderen Funkzellen (die dort Nutzsignale sind) ein besseres Nutzsignal-Störsignal-Verhältnis haben als physikalischen Kanäle, welche Sprachkanälen zugewiesen werden. Welche physikalischen Kanäle als Datenkanäle und welche als Sprachkanäle verwendet werden können, kann einmal fest vorgegeben sein oder dynamisch angepaßt werden. Das Nutzsignal-Störsignal-Verhältnis kann theoretisch bestimmt werden. Das Nutzsignal-Störsignal-Verhältnis kann insbesondere auch durch Messungen für die unterschiedlichen Frequenzen in den Funkzellen bestimmt werden und als Grundlage für die Entscheidungen bei der Zuweisung von physikalischen Kanälen verwendet werden.

## Patentansprüche

1. Verfahren zur Zuweisung eines für eine Telekommunikationsverbindung über ein Telekommunikationsnetz zwischen einem Anrufer (1) und einem Angerufenen (2) angeforderten Kanals (13),
wobei bei Anforderung eines Datenkanals bevorzugt mindestens ein physikalischer Kanal (13) mit anderem Nutzsignal-Störsignal-Verhältnis (13,21) ausgewählt wird als bei Anforderung eines Sprachkanals, wobei die Zuweisung eines physikalischer Kanals (13) für eine Luftschnittstelle in einem Mobilfunknetz erfolgt.

2. Verfahren nach Anspruch 1,
**dadurch gekennzeichnet,**
**daß** bei Anforderung eines Datenkanals bevorzugt mindestens ein physikalischer Kanal (13) mit besserem Nutzsignal-Störsignal-Verhältnis (13,21) ausgewählt wird als bei Anforderung eines Sprachkanals.

3. Verfahren nach einem der vorhergehenden Ansprüche,
**dadurch gekennzeichnet,**
**daß** mehrere physikalische Kanäle einem Datenkanal zugewiesen werden.

4. Verfahren nach einem der vorhergehenden Ansprüche,
**dadurch gekennzeichnet,**
**daß** das bessere Nutzsignal-Störsignal-Verhältnis eines Datenkanals verglichen mit einem Sprachkanal erzielt wird,
indem jeweils in einer Mobilfunkzelle (3) mindestens ein physikalischer Kanal (13) einem Datenkanal zugewiesen wird, dessen Störung durch physikalische Kanäle gleicher und/oder benachbarter Frequenzen in benachbarten Funkzellen (4,5,6) geringer ist als bei anderen physikalischen Kanälen.

5. Verfahren nach einem der vorhergehenden Ansprüche,
**dadurch gekennzeichnet,**
**daß** der Datenkanal ein zwischen dem Anrufer und dem Angerufenen geschalteter bidirektionaler oder unidirektionaler Simplex- oder Duplex-Kanal ist.

6. Verfahren nach einem der vorhergehenden Ansprüche,
**dadurch gekennzeichnet,**
**daß** die Datenübertragung zwischem Anrufer und Angerufenen auch paketvermittelt ist.

7. Mobilfunk-Telekommunikationsnetz (3 bis 6, 14 bis 17) mit mehreren aneinandergrenzenden Mobilfunkzellen (3 bis 6),
in welchem Kanal-Zuweisungsvorrichtungen (14 bis 17) für die Zuweisung von angeforderten Kanälen zu einem Anrufer und/oder Angerufenen so ausgebildet sind, daß bei Anforderung eines Datenkanals bevorzugt mindestens ein physikalischer Kanal (13) mit anderem Nutzsignal-Störsignal-Verhältnis (13,21) ausgewählt wird als bei Anforderung eines Sprachkanals, wobei die Zuweisung eines physikalischer Kanals (13) für eine Luftschnittstelle in einem Mobilfunknetz erfolgt.

8. Mobilfunk-Telekommunikationsnetz (3 bis 6, 14 bis 17) nach Anspruch 7.
**dadurch gekennzeichnet,**
**daß** bei Anforderung eines Datenkanals bevorzugt mindestens ein physikalischer Kanal (13) mit besserem Nutzsignal-Störsignal-Verhältnis (13,21) ausgewählt wird als bei Anforderung eines Sprachkanals.

9. Mobilfunk-Telekommunikationsnetz (3 bis 6, 14 bis 17) nach einem der Ansprüche 7 oder 8,
**dadurch gekennzeichnet,**
**daß** mehrere physikalische Kanäle einem Datenkanal zugewiesen werden.

10. Mobilfunk-Telekommunikationsnetz (3 bis 6, 14 bis 17) nach einem der Ansprüche 7 bis 9.
**dadurch gekennzeichnet,**
**daß** das bessere Nutzsignal-Störsignal-Verhältnis (13,21) eines Datenkanals verglichen mit einem Sprachkanal erzielt wird,
indem jeweils in einer Mobilfunkzelle (3) mindestens ein physikalischer Kanal (13) einem Datenkanal zugewiesen wird, dessen Störung durch physikalische Kanäle gleicher und/oder benachbarter Frequenzen in benachbarten Funkzellen (4,5,6) geringer ist als bei anderen physikalischen Kanälen

11. Mobilfunk-Telekommunikationsnetz (3 bis 6, 14 bis 17) nach einem der Ansprüche 7 bis 10,
**dadurch gekennzeichnet,**
**daß** der Datenkanal ein zwischen dem Anrufer und dem Angerufenen geschalteter bidirektionaler oder unidirektionaler Simplex- oder Duplex-Kanal ist.

## Claims

1. A method for allocating a channel (13) requested for a telecommunication connection via a telecommunication network between a caller (1) and a called party (2), preferably at least one physical channel (13) with a different useful signal/interference signal ratio (13, 21) being selected when a data channel is requested than when a voice channel is requested, a physical channel (13) being allocated for an air interface in a mobile radio network.

2. A method according to claim 1,
**characterised in that**
preferably at least one physical channel (13) with a better useful signal/interference signal ratio (13, 21) is selected when a data channel is requested than when a voice channel is requested.

3. A method according to one of the preceding claims,
**characterised in that**
a plurality of physical channels are allocated to one data channel.

4. A method according to one of the preceding claims,
**characterised in that**
the better useful signal/interference signal ratio of a data channel is achieved compared with a voice channel by at least one physical channel (13) being allocated to a data channel in each case in a mobile radio cell (3), disturbance of which channel by physical channels of identical and/or adjacent frequencies in adjacent radio cells (4, 5, 6) is less than in the case of other physical channels.

5. A method according to one of the preceding claims,
**characterised in that**
the data channel is a bidirectional or unidirectional simplex or duplex channel switched between the caller and the called party.

6. A method according to one of the preceding claims,
**characterised in that**
the data transmission between caller and called party is also packet-switched.

7. A mobile radio telecommunication network (3 to 6, 14 to 17) with a plurality of adjoining mobile radio cells (3 to 6),
in which channel allocation devices (14 to 17) for allocation of requested channels to a caller and/or called party are constructed in such a way that preferably a physical channel (13) with a different useful signal/interference signal ratio is selected when a data channel is requested than when a voice channel is requested, a physical channel (13) being allocated for an air interface in a mobile radio network.

8. A mobile radio telecommunication network (3 to 6, 14 to 17) according to claim 7,
**characterised in that**
preferably at least one physical channel (13) with a better useful signal/interference signal ratio (13, 21) is selected when a data channel is requested than when a voice channel is requested.

9. A mobile radio telecommunication network (3 to 6, 14 to 17) according to one of claims 7 or 8,
**characterised in that**
a plurality of physical channels are allocated to one data channel.

10. A mobile radio telecommunication network (3 to 6, 14 to 17) according to one of claims 7 to 9,
**characterised in that**
the better useful signal/interference signal ratio of a data channel is achieved compared with a voice channel by at least one physical channel (13) being allocated to a data channel in each case in a mobile radio cell (3), disturbance of which channel by physical channels of identical and/or adjacent frequencies in adjacent radio cells (4, 5, 6) is less than in the case of other physical channels.

11. A mobile radio telecommunication network (3 to 6, 14 to 17) according to one of claims 7 to 10,
**characterised in that**
the data channel is a bidirectional or unidirectional simplex or duplex channel switched between the caller and the called party.

## Revendications

1. Procédé d'affectation d'un canal (13) demandé pour une liaison de télécommunication par le biais d'un réseau de télécommunication entre un appelant (1) et un appelé (2), dans lequel au moins un canal physique (13) présentant un rapport signal utile/signal parasite (13, 21) différent de celui attribué dans le cas d'une demande de canal vocal est de préférence choisi en cas de demande d'un canal de données, l'affectation d'un canal physique (13) ayant lieu pour une interface aérienne dans un réseau de radiotéléphonie mobile.

2. Procédé selon la revendication 1,
**caractérisé en ce qu'**en cas de demande d'un canal de données, il est de préférence choisi au moins un canal physique (13) ayant un meilleur rapport signal utile/signal parasite (13, 21) qu'en cas de demande d'un canal vocal.

3. Procédé selon l'une des revendications précédentes,
**caractérisé en ce que** plusieurs canaux physiques sont affectés à un canal de données.

4. Procédé selon l'une des revendications précédentes,
**caractérisé en ce que** le meilleur rapport signal utile/signal parasite d'un canal de données comparé à un canal vocal est obtenu **en ce que** dans chaque cellule de radiotéléphonie mobile (3) il est affecté au moins un canal physique (13) à un canal de données, dont le parasitage par des canaux physiques de fréquences identiques et/ou voisines dans les cellules voisines (4, 5, 6) est plus faible que pour les autres canaux physiques.

5. Procédé selon l'une des revendications précédentes,
**caractérisé en ce que** le canal de données est un canal simplex ou duplex bidirectionnel ou unidirectionnel connecté entre l'appelant et l'appelé.

6. Procédé selon l'une des revendications précédentes,
**caractérisé en ce que** la transmission de données est également réalisée par paquets entre l'appelant et l'appelé.

7. Réseau de télécommunication par radiotéléphonie mobile (3 à 6, 14 à 17) comportant plusieurs cellules de radiotéléphonie mobile (3 à 6) contiguës, dans lequel des dispositifs d'affectation de canal (14 à 17) pour l'affectation de canaux demandés à un appelant et/ou à un appelé sont réalisés de telle manière qu'en cas de demande d'un canal de données, il est de préférence choisi au moins un canal physique (13) ayant un rapport signal utile/signal parasite (13, 21) différent de celui choisi en cas de demande d'un canal vocal, l'affectation d'un canal physique (13) ayant lieu pour une interface aérienne dans un réseau de radiotéléphonie mobile.

8. Réseau de télécommunication par radiotéléphonie mobile (3 à 6, 14 à 17) selon la revendication 7,
**caractérisé en ce qu'**en cas de demande d'un canal de données, il est de préférence choisi au moins un canal physique (13) ayant un meilleur rapport signal utile/signal parasite (13, 21) que celui choisi en cas de demande d'un canal vocal.

9. Réseau de télécommunication par radiotéléphonie mobile (3 à 6, 14 à 17) selon la revendication 7 ou 8,
**caractérisé en ce que** plusieurs canaux physiques sont affectés à un canal de données.

10. Réseau de télécommunication par radiotéléphonie mobile (3 à 6, 14 à 17) selon l'une des revendications 7 à 9,
**caractérisé en ce que** l'on obtient le meilleur rapport signal utile/signal parasite (13, 21) d'un canal de données comparé à un canal vocal, en affectant dans chaque cellule de radiotéléphonie mobile (3) au moins un canal physique (13) à un canal de données, dont le parasitage par les canaux physiques de fréquences identiques et/ou voisines dans les cellules radio voisines (4, 5, 6) est plus faible que pour les autres canaux physiques.

11. Réseau de télécommunication par radiotéléphonie mobile (3 à 6, 14 à 17) selon l'une des revendications 7 à 10,
**caractérisé en ce que** le canal de données est un canal simplex ou duplex bidirectionnel ou unidirectionnel connecté entre l'appelant et l'appelé.
